# EUROPÄISCHE PATENTSCHRIFT

(11) **EP 3 544 827 B1**
(45) Veröffentlichungstag und Bekanntmachung des Hinweises auf die Patenterteilung: **10.11.2021**
(21) Anmeldenummer: 17777028.6
(22) Anmeldetag: 28.09.2017
(51) Int. Cl.: B60C 9/20, B60C 9/00, D07B 1/06

(54) **FAHRZEUGLUFTREIFEN MIT EINER GÜRTELLAGE AUFWEISEND STAHL-FESTIGKEITSTRÄGER**
PNEUMATIC VEHICLE TYRE WITH A BELT PLY HAVING STEEL REINFORCING ELEMENTS
PNEUMATIQUE DE VÉHICULE COMPORTANT UNE COUCHE DE CEINTURE COMPRENANT DES ÉLÉMENTS DE RENFORT EN ACIER

(30) Priorität: 25.11.2016 DE 102016223400; 16.12.2016 DE 102016225234
(43) Veröffentlichungstag der Anmeldung: 02.10.2019
(73) Patentinhaber: Continental Reifen Deutschland GmbH, 30165 Hannover (DE)
(72) Erfinder: PALAVRAS, Joana, 30165 Hannover (DE); RANDOVA, Alexandra, 01701 Povazska Bystrica (SK); NOVOSAD, Lubos, 02001 Puchov (SK); WERNER, Viktoria, 30827 Garbsen (DE)
(74) Vertreter: Continental Corporation
(86) Internationale Anmeldenummer: PCT/EP2017/074574
(87) Internationale Veröffentlichungsnummer: WO 2018/095616

(56) Entgegenhaltungen:
- EP-A1- 0 679 543
- EP-A2- 0 237 462
- EP-B1- 0 849 098
- WO-A1-2015/181787
- WO-A1-2016/098035
- US-B1- 6 705 370

## Beschreibung

Die Erfindung betrifft einen Fahrzeugluftreifen mit einem Gürtel aus zwei oder mehr sich in einem Winkel kreuzenden, Festigkeitsträger aufweisenden Gürtellagen, wobei die Festigkeitsträger innerhalb jeder Gürtellage im Wesentlichen parallel und beabstandet zueinander angeordnet und in Kautschukmaterial eingebettet sind, wobei der Gürtel mindestens eine erste Gürtellage aufweist, deren Festigkeitsträger durch Stahlcorde aus zwei miteinander verdrehten Stahl-Monofilamenten gebildet sind, wobei der Stahl die Festigkeitsträgerklasse Ultra-Tensile (UT) mit jeweils einer Zugfestigkeit von 3185 N/mm2 bis 3920 N/mm2 aufweist.

Ein Fahrzeugluftreifen radialer Bauart weist im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort meist durch Umschlingen zugfester Wulstkerne verankert ist, einen radial außen befindlichen profilierten Laufstreifen und einen zwischen dem Laufstreifen und der Karkasse angeordneten Festigkeitsträgerlagen aufweisenden Gürtel auf, welcher häufig radial außen mit der Gürtelbandage abgedeckt ist. Die Gürtelbandage kann ein- oder mehrlagig ausgebildet sein und deckt zumindest die Gürtelränder ab.

Üblich ist, dass zur Herstellung einer Gürtellage Festigkeitsträger in Kautschuk eingebettet werden, indem eine Schar von im Wesentlichen parallel liegenden Festigkeitsträgern in Längsrichtung einen Kalander oder einen Extruder zur Ummantelung mit der Kautschukmischung durchlaufen. Diese Bahnen werden in der Regel quer zu ihrer Längsrichtung durchschnitten, so dass die Teile einzeln oder zusammengefügt als Festigkeitsträgerlagen im Reifen eingesetzt werden zu können.

Der aus zwei oder mehr sich in einem Winkel kreuzenden Gürtellagen bestehende Gürtel sorgt für die Steifigkeit der Lauffläche in Längs- und Querrichtung. Dieses dient beim Fahren der Kraftübertragung, verbessert die Seitenführung und verringert den Abrieb des Reifens.

Es ist bekannt und heutzutage üblich, Stahlkorde als Festigkeitsträger in den Gürtellagen des Gürtels einzusetzen. Die Stahlkorde sind innerhalb der Festigkeitsträgerlage im Wesentlichen parallel und beabstandet zueinander angeordnet und lagenbildend in Kautschukmaterial eingebettet.

Die EP 0 849 098 B1 offenbart einen Fahrzeugluftreifen mit einer ersten Gürtellage aufweisend Stahl-Korde der Konstruktion 2 x 0,35 mm, wobei die Stahl-Monofilamente eine Zugfestigkeit von in etwa 3700 N/mm² aufweisen. Bei einer solchen Konstruktion sind zwei Stahl-Monofilamente mit einem Durchmesser von je 0,35 mm zu einem Kord verdreht. Eine solche erste Gürtellage weist vorteilhafte Festigkeitseigenschaften bei einer vergleichsweise geringen Lagendicke auf.

Bei der Konstruktion von Gürtellagen müssen aber auch andere Eigenschaften wie Handling oder Rollwiderstand berücksichtigt werden.

Es ist daher die Aufgabe der Erfindung, einen Fahrzeugluftreifen mit geringem Rollwiderstand bei gleichzeitig guten Handlingeigenschaften zur Verfügung zu stellen.

Die Aufgabe wird gelöst, indem die erste Gürtellage bei vorgegebener Dehnung um 1% in Richtung der Festigkeitsträgerlängserstreckung eine Spannung von 26000 N per dm Breite bis 43000 N per dm Breite aufweist.

Erfindungsgemäß ist erreicht, dass Festigkeitsträger mit einer vorteilhaften Zugfestigkeit eingesetzt werden, wobei die erste Gürtellage bei vorgegebener Dehnung um 1% eine vorteilhafte Spannung per dm Breite der ersten Gürtellage aufweist. Hintergrund ist, dass einerseits eine Spannung von weniger als 26000 N per dm Breite sich als nachteilig für die Handlingeigenschaften des Reifens erweist. Andererseits ist eine erste Gürtellage mit einer Spannung von mehr als 43000 N per dm Breite mit einem vergleichsweise hohen Materialeinsatz verbunden, was sich nachteilig auf die Materialkosten und auf das Gewicht und somit auf den Rollwiderstand des Reifens auswirkt.

Hierdurch ist somit ein Reifen zur Verfügung gestellt, der bei geringem Rollwiderstand gleichzeitig vorteilhafte Handlingeigenschaften aufweist.

Ein Stahl der Festigkeitsträgerklasse Ultra-Tensile (UT) weist im Rahmen der Erfindung eine Zugfestigkeit von 3185 N/mm² bis 3920 N/mm² auf. Die "Zugfestigkeit" ist die Zugspannung, die benötigt wird, um einen Prüfkörper zu zerreißen. Sie wird berechnet aus der im Zugversuch ermittelten Bruchspannung bezogen auf den ursprünglichen Querschnitt des Prüfkörpers. Die Zugfestigkeit ist gemessen in Anlehnung an die ASTM D 2969, ASTM D 4975 und BISTA E6. Die Kraft-Dehnungskurve zur Ermittlung der Spannung ist gemessen in Anlehnung an die ASTM D 2969, ASTM D 4975 und BISTA E6.

In einer vorteilhaften Ausführungsform beträgt der Durchmesser der Stahl-Monofilamente D 0,31 mm bis 0,36 mm. Die entsprechenden Festigkeitsträger weisen somit einen Durchmesser von in etwa 0,62 mm bis 0,72 mm auf. Hierdurch können die vorteilhaften Eigenschaften der ersten Gürtellage bezüglich Materialeinsatz und Rollwiderstand weiter verbessert werden.

Im Rahmen der Erfindung wird der Durchmesser D in Formeln einheitenlos in mm (Millimetern) eingesetzt. Die Einheiten, in der die berechnete Größe angegeben ist, sind der Formel nachgereiht.

Als besonders vorteilhaft hat es sich erwiesen, wenn die Stahl-Monofilamente einen besonders geringen Durchmesser D von 0,31 mm bis 0,33 mm, besonders bevorzugt von 0,32 mm, aufweisen. Hierdurch ist eine besonders dünne erste Gürtellage zur Verfügung gestellt. In Bezug auf eine hohe Zugfestigkeit ist es von Vorteil, wenn der Durchmesser D 0,34 mm bis 0,36 mm, bevorzugt dass der Durchmesser D 0,35 mm, beträgt.

Bei einer bezüglich des Zielkonfliktes Handling versus Rollwiderstand besonders vorteilhaften Ausführungsform weist die erste Gürtellage bei vorgegebener Dehnung um 1% in Richtung der Festigkeitsträgerlängserstreckung eine Spannung von B^{∗} (4400 - 2000^{∗}D) ^{∗} (D/2)^{2 ∗} π/1,6 [N] per dm Breite auf, wobei B einen Wert von 80 bis 90 einnimmt. Für einen Durchmesser von D = 0,32 mm ergibt sich somit eine Spannung von 30240 N per dm Breite bis 34020 N per dm Breite. Für einen Durchmesser von D = 0,35 mm ergibt sich somit eine Spannung von in etwa 35598 N per dm Breite bis 40048 N per dm Breite

In einer vorteilhaften Ausführungsform weisen die Stahl-Monofilamente eine Zugfestigkeit von 3905 - 2000^{∗}D [N/mm²] bis 4540 - 2000^{∗}D [N/mm²] auf, wobei D den Durchmesser der Stahl-Monofilamente bezeichnet. Stahl-Monofilamente dieser Zugfestigkeit weisen eine besonders vorteilhafte Festigkeitseigenschaften bei geringem Durchmesser auf. Für einen Durchmesser von D = 0,32 mm ergibt sich somit eine Zugfestigkeit von 3265 N/mm² bis 3900 N/mm². Für einen Durchmesser von D = 0,35 mm ergibt sich somit eine Zugfestigkeit von 3205 N/mm² bis 3840 N/mm².

Vorteilhaft ist es, wenn die Stahl-Festigkeitsträger eine Bruchkraft von 525 N bis 620 N, bevorzugt eine Bruchkraft von 580 N bis 590 N, aufweisen. Vorteilhaft ist es auch, wenn für eine Dehnung der Stahl-Festigkeitsträger um 1% eine Kraft von 340 N bis 400 N, bevorzugt eine Kraft von 375 N bis 385 N, aufgewendet werden muss. Bruchkraft und Dehnungskraft sind gemessen in Anlehnung an die ASTM D 2969, ASTM D 4975 und BISTA E6. Besonders bevorzugt handelt es sich um Stahl-Monofilamente mit Durchmesser D=0,32 mm.

Eine ausreichende Festigkeit, insbesondere gegenüber Schlagbeanspruchung, bei gleichzeitig vorteilhafter geringer Schichtdicke der ersten Gürtellage ist erreicht, wenn die erste Gürtellage bei Belastung in Richtung der Festigkeitsträgerlagenerstreckung eine Schichtfestigkeit im Bereich von A^{∗} (4400 - 2000^{∗}D) ^{∗} (D/2)^{2 ∗} π [N] per dm Breite aufweist, wobei A einen Wert von 80 bis 90 einnimmt. Für einen Durchmesser von D = 0,32 mm ergibt sich somit eine Schichtfestigkeit von 48384 N per dm Breite bis 54431 N per dm Breite. Für einen Durchmesser von D = 0,35 mm ergibt sich somit eine Schichtfestigkeit von 56957 N per dm Breite bis 64077 N per dm Breite.

Eine vorteilhafte Ausgestaltung des Reifens ergibt sich, wenn die Stahl-Monofilamente in der ersten Gürtellage mit 80 epdm bis 95 epdm, bevorzugt mit 90 epdm, angeordnet sind. Besonders vorteilhaft ist es, wenn der Durchmesser der Stahl-Monofilamente 0,32 mm und die Fadendichte 85 epdm bis 95 epdm, bevorzugt 90 epdm, beträgt.

Ein Fahrzeugluftreifen weist üblicherweise zwei, drei, vier oder mehr Gürtellagen auf. Jede dieser Lagen kann eine erste Gürtellage sein. Es kann sich um eine radial innerste Lage oder eine radial äußerste Lage oder um eine mittlere Gürtellage handeln.

Vorteilhaft ist es, wenn der Gürtel dabei zwei erste Gürtellagen aufweist, wobei die Stahl-Monofilamente der einen ersten Gürtellage gegenläufig zu den Stahl-Monofilamenten der anderen ersten Gürtellage in Bezug auf die Reifenumfangsrichtung geneigt sind.

In Bezug auf Gewicht und Materialeinsatz ist es besonders vorteilhaft, wenn alle Gürtellagen des Reifens erste Gürtellagen sind. Ein solcher Reifen weist einen besonders niedrigen Rollwiderstand auf.

Der vorteilhafte erfindungsgemäße Reifen kann ein Reifen für einen Personenkraftwagen, einen Van, einen Light-Truck, ein Nutzfahrzeug oder ein Kraftrad sein.

Weitere Vorteile der Erfindung wird im Zusammenhang mit dem nachfolgenden Beispiel einer ersten Gürtellage, die in erfindungsgemäßen Fahrzeugluftreifen einsetzbar sind, näher erläutert:
Ein beispielhafter Reifen der Reifengröße 185/60 R15 weist eine erste Gürtellage mit einem Gürtelwinkel von 28° zur Umfangsrichtung als Festigkeitsträger Stahl-Festigkeitsträger der Konstruktion 2 x 0,32 UT auf. Die Stahl-Monofilamente weisen eine Durchmesser D = 0,32 mm auf und sind mit einer Fadendichte von 90 epdm angeordnet. Weiter weist die erste Gürtellage bei vorgegebener Dehnung um 1% in Richtung der Festigkeitsträgerlängserstreckung eine Spannung von 30240 N per dm Breite bis 34020 N per dm Breite auf. Die Stahl-Monofilamente weisen eine Zugfestigkeit von 3265 N/mm² bis 3900 N/mm²auf. Die Schicht weist eine Schichtfestigkeit von 48384 N per dm Breite bis 54431 N per dm Breite auf.

## Patentansprüche

1. Fahrzeugluftreifen mit einem Gürtel aus zwei oder mehr sich in einem Winkel kreuzenden, Festigkeitsträger aufweisenden Gürtellagen, wobei die Festigkeitsträger innerhalb jeder Gürtellage im Wesentlichen parallel und beabstandet zueinander angeordnet und in Kautschukmaterial eingebettet sind, wobei der Gürtel mindestens eine erste Gürtellage aufweist, deren Festigkeitsträger durch Stahlcorde aus zwei miteinander verdrehten Stahl-Monofilamenten gebildet sind, wobei der Stahl die Festigkeitsträgerklasse Ultra-Tensile (UT) mit jeweils einer Zugfestigkeit von 3185 N/mm² bis 3920 N/mm² , in Anlehnung an die ASTM D 2969, ASTM D 4975 und BISTA E6 gemessen, aufweist,
**dadurch gekennzeichnet, dass**
die erste Gürtellage bei vorgegebener Dehnung um 1% in Richtung der Festigkeitsträgerlängserstreckung eine Spannung von 26000 N per dm Breite bis 43000 N per dm Breite aufweist, wobei die Kraft-Dehnungskurve zur Ermittlung der Spannung gemessen ist in Anlehnung an die ASTM D 2969, ASTM D 4975 und BISTA E6.

2. Fahrzeugluftreifen nach Anspruch 1, **dadurch gekennzeichnet, dass** ein Durchmesser der Stahl-Monofilamente D 0,31 mm bis 0,36 mm, bevorzugt dass der Durchmesser D 0,31 mm bis 0,33 mm, besonders bevorzugt 0,32 mm, beträgt.

3. Fahrzeugluftreifen nach Anspruch 2, **dadurch gekennzeichnet, dass** der Durchmesser D 0,34 mm bis 0,36 mm, bevorzugt dass der Durchmesser D 0,35 mm, beträgt.

4. Fahrzeugluftreifen nach einem oder mehreren der vorangehenden Ansprüche, **dadurch gekennzeichnet, dass** die erste Gürtellage bei vorgegebener Dehnung um 1% in Richtung der Festigkeitsträgerlängserstreckung eine Spannung von B^{∗} (4400 - 2000^{∗}D) ^{∗} (D/2)^{2 ∗} π/1,6 [N] per dm Breite aufweist, wobei B einen Wert von 80 bis 90 einnimmt.

5. Fahrzeugluftreifen nach einem oder mehreren der vorangehenden Ansprüche, **dadurch gekennzeichnet, dass** die Stahl-Monofilamente jeweils eine Zugfestigkeit von 3905 - 2000^{∗}D [N/mm²] bis 4540 - 2000^{∗}D [N/mm²] aufweisen, wobei D den Durchmesser der Stahl-Monofilamente bezeichnet.

6. Fahrzeugluftreifen nach einem oder mehreren der vorangehenden Ansprüche, **dadurch gekennzeichnet, dass** die Stahl-Monofilamente einen Durchmesser von D=0,32 mm aufweisen, dass die **Stahl-Festigkeitsträger** eine Bruchkraft von 525 N bis 620 N aufweisen und dass eine Dehnung eines **Stahl-Festigkeitsträgers** von 1% durch eine Kraft von 340 N bis 400 N erwirkt wird.

7. Fahrzeugluftreifen nach einem oder mehreren der vorangehenden Ansprüche, **dadurch gekennzeichnet, dass** die erste Gürtellage bei Belastung in Richtung der Festigkeitsträgerlagenerstreckung eine Schichtfestigkeit im Bereich von A^{∗} (4400 - 2000^{∗}D) ^{∗} (D/2)^{2 ∗} π [N] per dm Breite aufweist, wobei A einen Wert von 80 bis 90 einnimmt.

8. Fahrzeugluftreifen nach einem oder mehreren der vorangehenden Ansprüche, **dadurch gekennzeichnet, dass** die Stahl-Festigkeitsträger in der ersten Gürtellage mit 80 epdm bis 95 epdm, bevorzugt mit 90 epdm, angeordnet sind.

9. Fahrzeugluftreifen nach einem oder mehreren der vorangehenden Ansprüche, **dadurch gekennzeichnet, dass** der Gürtel genau zwei Gürtellagen aufweist, und dass die zwei Gürtellagen erste Gürtellagen sind.

10. Fahrzeugluftreifen nach einem oder mehreren der vorangehenden Ansprüche, **dadurch gekennzeichnet, dass** alle Gürtellagen des Gürtels erste Gürtellagen sind.

11. Fahrzeugluftreifen nach einem oder mehreren der vorangehenden Ansprüche, **dadurch gekennzeichnet, dass** es sich um einen Reifen für einen Personenkraftwagen, einen Van, einen Light-Truck, ein Nutzfahrzeug oder ein Kraftrad handelt.

## Claims

1. Pneumatic vehicle tyre having a belt composed of two or more belt plies which have reinforcement members crossing one another at an angle, wherein the reinforcement members within each belt ply are arranged substantially parallel to and spaced apart from one another and are embedded in rubber material,
wherein the belt has at least one first belt ply, the reinforcement members of which are formed by steel cords composed of two twisted-together steel monofilaments, wherein the steel falls within the reinforcement member class Ultra-Tensile (UT) with in each case a tensile strength of 3185 N/mm² to 3920 N/mm², measured in accordance with ASTM D 2969, ASTM D 4975 and BISTA E6,
**characterized in that**
the first belt ply, at a predefined elongation of 1% in the direction of the reinforcement member longitudinal extent, has a stress of 26000 N per dm width to 43000 N per dm width, wherein the force-elongation curve for the determination of the stress is measured in accordance with ASTM D 2969, ASTM D 4975 and BISTA E6.

2. Pneumatic vehicle tyre according to Claim 1, **characterized in that** a diameter of the steel monofilaments D amounts to 0.31 mm to 0.36 mm, preferably in that the diameter D amounts to 0.31 mm to 0.33 mm, particularly preferably 0.32 mm.

3. Pneumatic vehicle tyre according to Claim 2, **characterized in that** the diameter D amounts to 0.34 mm to 0.36 mm, preferably **in that** the diameter D amounts to 0.35 mm.

4. Pneumatic vehicle tyre according to one or more of the preceding claims, **characterized in that** the first belt ply, at a predefined elongation of 1% in the direction of the reinforcement member longitudinal extent, has a stress of B* (4400 - 2000*D) * (D/2)² * Π/1.6 [N] per dm width, wherein B assumes a value of 80 to 90.

5. Pneumatic vehicle tyre according to one or more of the preceding claims,
**characterized in that** the steel monofilaments have in each case a tensile strength of 3905 - 2000*D [N/mm²] to 4540 - 2000*D [N/mm²], where D denotes the diameter of the steel monofilaments.

6. Pneumatic vehicle tyre according to one or more of the preceding claims,
**characterized in that** the steel monofilaments have a diameter of D = 0.32 mm, **in that** the **steel reinforcement members** have a breaking strength of 525 N to 620 N, and **in that** an elongation of a **steel reinforcement member** of 1% is caused by a force of 340 N to 400 N.

7. Pneumatic vehicle tyre according to one or more of the preceding claims,
**characterized in that** the first belt ply, under load in the direction of the reinforcement member ply extent, has a layer strength in the region of A* (4400 - 2000*D) * (D/2)² * n [N] per dm width, wherein A assumes a value of 80 to 90.

8. Pneumatic vehicle tyre according to one or more of the preceding claims,
**characterized in that** the steel reinforcement members in the first belt ply are arranged with 80 epdm to 95 epdm, preferably with 90 epdm.

9. Pneumatic vehicle tyre according to one or more of the preceding claims,
**characterized in that** the belt has exactly two belt plies, and **in that** the two belt plies are first belt plies.

10. Pneumatic vehicle tyre according to one or more of the preceding claims,
**characterized in that** all belt plies of the belt are first belt plies.

11. Pneumatic vehicle tyre according to one or more of the preceding claims,
**characterized in that** it is a tyre for a passenger motor vehicle, a van, a light truck, a utility vehicle or a motorcycle.

## Revendications

1. Bandage pneumatique de véhicule comprenant une ceinture composée de deux couches de ceinture ou plus, qui se croisent selon un angle et qui possèdent des supports de renfort, les supports de renfort à l'intérieur de chaque couche de ceinture étant disposés essentiellement parallèlement et espacés les uns des autres et étant incorporés dans un matériau de caoutchouc, la ceinture possédant au moins une première couche de ceinture dont les supports de renfort sont formés par des cordes en acier composées de deux monofilaments en acier torsadés entre eux, l'acier possédant la classe de solidité Ultra-Tensile (UT) avec respectivement une résistance à la traction de 3 185 N/mm² à 3 920 N/mm², mesurée en référence aux normes ASTM D 2969, ASTM D 4975 et BISTA E6,
**caractérisé en ce que**
la première couche de ceinture, avec un allongement prédéfini de 1 % dans le sens de l'extension longitudinale des supports de renfort, présente une tension de 26 000 N par dm de largeur à 43 000 N par dm de largeur, la courbe de force-allongement pour la détermination de la tension étant mesurée en référence aux normes ASTM D 2969, ASTM D 4975 et BISTA E6.

2. Bandage pneumatique de véhicule selon la revendication 1, **caractérisé en ce qu'un** diamètre des monofilaments en acier D est de 0,31 mm à 0,36 mm, de préférence **en ce que** le diamètre D est de 0,31 mm à 0,33 mm, particulièrement de préférence est de 0,32 mm.

3. Bandage pneumatique de véhicule selon la revendication 2, **caractérisé en ce que** le diamètre D est de 0,34 mm à 0,36 mm, de préférence **en ce que** le diamètre D est égal à 0,35 mm.

4. Bandage pneumatique de véhicule selon une ou plusieurs des revendications précédentes, **caractérisé en ce que** la première couche de ceinture, avec un allongement prédéfini de 1 % dans le sens de l'extension longitudinale des supports de renfort, présente une tension de B*(4 400 - 2 000*D) * (D/2)² * π/1,6 [N] par dm de largeur, B prenant une valeur de 80 à 90.

5. Bandage pneumatique de véhicule selon une ou plusieurs des revendications précédentes, **caractérisé en ce que** les monofilaments en acier présentent respectivement une résistance à la traction de 3 905 - 2000*D [N/mm²] à 4540 - 2000*D [N/mm²], D désignant le diamètre des monofilaments en acier.

6. Bandage pneumatique de véhicule selon une ou plusieurs des revendications précédentes, **caractérisé en ce que** les monofilaments en acier présentent un diamètre D = 0,32 mm, **en ce que** les **supports de renfort** en acier présentent une force de rupture de 525 N à 620 N et **en ce qu'**un allongement d'un **support de renfort** en acier de 1 % est provoqué par une force de 340 N à 400 N.

7. Bandage pneumatique de véhicule selon une ou plusieurs des revendications précédentes, **caractérisé en ce que** la première couche de ceinture, lors d'une sollicitation dans le sens de l'extension longitudinale des supports de renfort, présente une résistance intercouche dans la plage de A*(4 400 - 2 000*D) * (D/2)² * π [N] par dm de largeur, A prenant une valeur de 80 à 90.

8. Bandage pneumatique de véhicule selon une ou plusieurs des revendications précédentes, **caractérisé en ce que** les supports de renfort en acier sont disposés dans une première couche de ceinture avec de l'epdm 80 à l'epdm 95, de préférence avec de l'epdm 90.

9. Bandage pneumatique de véhicule selon une ou plusieurs des revendications précédentes, **caractérisé en ce que** la ceinture possède exactement deux couches de ceinture, et **en ce que** les deux couches de ceinture sont des premières couches de ceinture.

10. Bandage pneumatique de véhicule selon une ou plusieurs des revendications précédentes, **caractérisé en ce que** toutes les couches de ceinture de la ceinture sont des premières couches de ceinture.

11. Bandage pneumatique de véhicule selon une ou plusieurs des revendications précédentes, **caractérisé en ce qu'il** s'agit d'un bandage pour un véhicule de tourisme, un fourgon, une camionnette, un véhicule utilitaire ou une motocyclette.
